# EUROPÄISCHE PATENTANMELDUNG

(11) **EP 1 990 166 A1**
(43) Veröffentlichungstag der Anmeldung: **12.11.2008**
(21) Anmeldenummer: 07009489.1
(22) Anmeldetag: 11.05.2007
(51) Int. Cl.: B28B 3/20, B23P 15/24

(54) **Mundstück zum Extrudieren einer keramischen Masse**

(71) Anmelder: Ziegelmundstückbau Braun GmbH, 88048 Friedrichshafen (DE)
(72) Erfinder: Berger, Harald, 88690 Uhldingen-Mühlhofen (DE)
(74) Vertreter: Engelhardt, Guido

(57) **Zusammenfassung**

Ein Mundstück (2) zum Extrudieren einer keramischen Masse zu einem Wabenkörper, das auf der Einlassseite (8) mit einer Vielzahl von Speisekanälen (5) und auf der Auslassseite (9) mit diesen korrespondierenden Auslasskanälen (9) versehen ist, soll wirtschaftlich mit hoher Genauigkeit herstellbar sein und eine hohe Verschleißfestigkeit aufweisen. Diese Aufgabe wird dadurch gelöst, dass die Speisekanäle (5) in einem gesonderten ersten Formkörperteil (3) und die Auslasskanäle (9) in einem gesonderten zweiten Formkörperteil (4) eingearbeitet sind, dass die beiden Formkörperteile (3, 4) fest miteinander verbunden sind und dass das zweite Formkörperteil (4) eine höhere Verschleißfestigkeit aufweist als das erste Formkörperteil (3).

## Beschreibung

Die Erfindung betrifft ein Mundstück zum Extrudieren einer keramischen Masse zu einem Wabenkörper, das auf der Einlassseite mit einer Vielzahl von Speisekanälen und auf der Auslassseite mit diesen korrespondierenden Auslasskanälen versehen ist, und ein Verfahren zur Herstellung eines derartigen Mundstückes.

Beim Strangpressen oder Extrudieren einer keramischen Masse wird der zu verarbeitende Werkstoff aus einer Druckkammer im plastifizierten Zustand durch ein entsprechend profiliertes Extrudierwerkzeug, z. B. ein Mundstück, kontinuierlich ins Freie gepresst. Dadurch können, je nach Ausgestaltung des dazu verwendeten Mundstückes, unterschiedliche Profile, z. B. ein Band, ein Rohr oder ein Wabenkörper ausgeformt werden. Zur Herstellung von Katalysatoren oder Rußfiltern als Wabenkörper mittels Extrudieren werden mitunter hoch abrasive Werkstoffe, beispielsweise Siliziumkarbid, verwendet und ein entsprechendes Extrudierwerkzeug.

Keramische Massen als zu verarbeitender Werkstoff zur Herstellung von Katalysatoren oder Russfiltern für Verbrennungsmotoren von Kraftfahrzeugen haben hoch abrasive Eigenschaften. Darüber hinaus werden an die Genauigkeit der Katalysatoren und Russfilter hohe Anforderungen gestellt. Herstellungstoleranzen werden im Allgemeinen nur im Bereich von 0,01 bis 0,05 mm akzeptiert. Die eingesetzten Mundstücke müssen deshalb verschleißfest sein, um einerseits die geforderten Herstellungstoleranzen einhalten zu können und um andererseits ein häufiges Auswechseln der Mundstücke an der Extrudiervorrichtung zu vermeiden.

Für Extruderwerkzeuge werden bisher unter anderem die folgenden Werkstoffe eingesetzt.

Gehärteter Werkzeugstahl mit oder ohne einer Nickelbeschichtung. Der Vorteil von gehärtetem und vorzugsweise beschichtetem Werkzeugstahl besteht in der hohen mechanischen Festigkeit, d. h. er ist mit einer hohen Spannung beanspruchbar und dem geringen Risiko bei der Herstellung, insbesondere dadurch, dass geringe Ausfallquoten gegeben sind. Nachteilig ist die geringe Verschleißfestigkeit von Verschleißschichten, die bei einem niedrigen Temperaturbereich aufgebracht werden und bei denen kein Verzug des Grundwerkstoffes zu befürchten ist.

Gehärteter Werkzeugstahl mit einer verschleißfesteren CVD-Beschichtung (Titan-Carbonat-Nitrit-Schicht). Der Vorteil liegt in der höheren Verschleißfestigkeit der CVD-Beschichtung. Nachteilig ist die aufwendige Herstellung des Grundkörpers in mehreren Verfahrensschritten vor der Aufbringung der CVD-Beschichtung, um einen Wärmeverzug während der CVD-Beschichtung zu vermeiden. Außerdem ist unmittelbar nach der CVD-Beschichtung die Oberfläche relativ rau, so dass ein längeres "Einfahren" des Mundstückes, d. h. eine Extrusion zum Zwecke des Glättens der Oberfläche, notwendig ist, bis eine Extrusion mit guter Qualität möglich ist.

Hartmetall als verschleißfester Werkstoff weist annähernd die Standzeit einer CVD-Beschichtung auf. Die Herstellung der Speisebohrungen nach dem Sintern ist wirtschaftlich aber nicht mehr möglich, weil aufgrund der großen Härte nur kleine Bohrgeschwindigkeiten erzielt werden können. Die Speisebohrungen können im Grünzustand, d. h. vor dem Sintern zwar eingebracht werden, die erforderlichen Genauigkeiten können aber nach dem Sintern aufgrund der hohen Schwindung beim Sintern nicht erreicht werden. Außerdem hat Hartmetall eine geringe mechanische Festigkeit, so dass bei größeren Mundstücken, beispielsweise ab einer Größe von 50mm x 50mm, die auftretenden Extrusionspressdrücke nicht mehr von derartigen Mundstücken aufgenommen werden können.

Die bisher verwendeten Werkstoffe und eingesetzten Herstellungsverfahren für Extrudierwerkzeuge, insbesondere Mundstücke, sind somit nicht ausreichend verschleißfest bzw. die Herstellung ist aufwendig und teuer bei nicht ausreichender Herstellungsgenauigkeit.

Des Weiteren ist aus der DE 22 54 563 eine Form bestehend aus einem einteiligen Formkörper und einer Manschette zum Extrudieren bekannt. Auf der Einlassfläche sind in diese Speiseleitungen und auf der Auslassfläche Auslassschlitze eingearbeitet. Als Material für die Form werden Aluminium, kalt gewalzter Stahl, Glas, Keramik, Wolframkarbid oder Aluminiumoxid vorgeschlagen. Auch mit diesem einteiligen Formkörper können die oben beschriebenen Nachteile nicht beseitigt werden.

Ferner ist aus der DE 36 22 695 A1 ein Mundstück zum Extrudieren einer keramischen Masse bekannt, bei dem der Formkörper von einer Aufnahmeplatte umgeben ist und das aus mehreren Kernsegmenten besteht. Die Kernsegmente weisen ein Kernteil und beiderseits an diesen angeformte Ansatzstücke auf, die durch Zuganker hindurch geführt sind. Dadurch soll das Mundstück einfacher und wirtschaftlicher hergestellt werden können, jedoch ist die wirtschaftliche Herstellung eines ausreichend verschleißfesten Werkstückes nicht möglich.

Es ist daher Aufgabe der Erfindung, ein Mundstück zum Extrudieren einer keramischen Masse zu schaffen, das wirtschaftlich mit hoher Genauigkeit herstellbar ist und das eine gute Verschleißfestigkeit aufweist. Außerdem besteht die Aufgabe darin, ein Verfahren zur Herstellung eines derartigen Mundstückes vorzuschlagen.

Diese Aufgabe wird gelöst mit einem Mundstück zum Extrudieren einer keramischen Masse zu einem Wabenkörper, das auf der Einlassseite mit einer Vielzahl von Speisekanälen und auf der Auslassseite mit diesen korrespondierenden Auslasskanälen versehen ist, wobei die Speisekanäle in einem gesonderten ersten Formkörperteil und die Auslasskanäle in einem gesonderten zweiten Formkörperteil eingearbeitet sind, dass die beiden Formkörperteile fest miteinander verbunden sind und dass das zweite Formkörperteil eine höhere Verschleißfestigkeit aufweist als das erste Formkörperteil.

Die Verwendung von zwei separaten Formkörperteilen mit einer unterschiedlichen Verschleißfestigkeit ermöglicht es, die Verschleißfestigkeit an die Anforderungen im Formkörperteil anzupassen. Das erste Formkörperteil mit den Speisekanälen weist eine geringe Verschleißfestigkeit auf, weil in den Speisekanälen ein Verschleiß tolerierbar ist. Das zweite Formkörperteil verfügt dagegen über eine hohe Verschleißfestigkeit, damit in den Auslasskanälen zum formgenauen Extrudieren von Wabenkörpern der Verschleiß gering gehalten wird.

Ein erfindungsgemäßes Verfahren zur Herstellung eines Mundstückes zum Extrudieren einer keramischen Masse zu Wabenkörpern mit einem Formkörper, wobei der Formkörper aus einem ersten Formkörperteil mit Speisekanälen auf der Einlassseite und einem zweiten Formkörperteil mit Auslasskanälen auf der Auslassseite besteht, umfasst folgende Schritte: Erstellen eines ersten Formkörperteils, Erstellen eines zweiten Formkörperteils mit einer höheren Verschleißfestigkeit als das erste Formkörperteil (oder umgekehrt), Verbinden des ersten und zweiten Formkörperteiles zum Formkörper, Einarbeiten von Speisekanälen in das erste Formkörperteil vor oder nach dem Verbinden und Einarbeiten von Auslasskanälen in das zweite Formkörperteil vor oder nach dem Verbinden.

In einer ergänzenden Ausgestaltung ist das erste Formkörperteil mit einer höheren Spannung beanspruchbar als das zweite Formkörperteil und das erste Formkörperteil besteht aus einem anderen Werkstoff als das zweite Formkörperteil. Dadurch kann im Wesentlichen das erste Formkörperteil die im Formkörper auftretenden Spannungen, insbesondere Biegespannungen, aufgrund der an der Einlassseite einwirkenden Extrusionspressdrücke aufnehmen.

Vorzugsweise ist die lichte Weite der Speisekanäle größer bemessen als die lichte Weite der Auslasskanäle.

In einer weiteren Ausführungsform ist der Werkstoff, aus dem das zweite Formkörperteil besteht, ein Hartmetall, z. B. Wolframkarbid, ein Sintermetall oder eine Keramik, z. B. Aluminiumoxyd oder Siliziumkarbid. Diese Werkstoffe weisen eine besonders große Verschleißfestigkeit auf.

In einer ergänzenden Ausgestaltung besteht das erste Formkörperteil aus Stahl, z. B. vergüteter Werkzeugstahl oder einem ähnlichem Werkkstoff. Diese Werkstoffe sind mit großen Spannungen beanspruchbar, d. h. sie können die im Formkörper auftreten Spannungen, insbesondere Biegespannungen, aufgrund der an der Einlassseite einwirkenden Extrusionspressdrücke aufnehmen.

In einer zusätzlichen Ausführungsform sind die beiden Formkörperteile von einem Rahmen bzw. Zweitrahmen eingefasst. Das Mundstück kann mit dem Rahmen leicht an einer Extrudiervorrichtung befestigt werden.

In einer weiteren Ausgestaltung werden das erste und zweite Formkörperteil mittels Kleben, Hartlöten, Sintern, Schweißen oder heißisostatischen Pressen miteinander verbunden.

In einer ergänzenden Ausführungsform werden die Speisekanäle des ersten Formkörperteils mittels Spanen, insbesondere Bohren, und/oder die Auslasskanäle des zweiten Formkörperteils mittels Funkenerosion in diese eingearbeitet.

In den Zeichnungen ist ein erfindungsgemäßes Ausführungsbeispiel dargestellt. Dieses wird nachfolgend näher erläutert. Im Einzelnen zeigt:
- Figur 1: ein Mundstück mit einem ersten und zweiten Formkörperteil ohne Speiseund Auslasskanäle, im Querschnitt,
- Figur 2: das Mundstück gemäß Figur 1 mit Speisekanälen,
- Figur 3: das Mundstück gemäß Figur 1 mit Speise- und Auslasskanälen,
- Figur 4: ein vergrößerter Ausschnitt aus Figur 3,
- Figur 5: das Mundstück gemäß Figur 1 mit Rahmen, in Draufsicht und
- Figur 6: das Mundstück gemäß Figur 5 mit Rahmen, im Querschnitt.

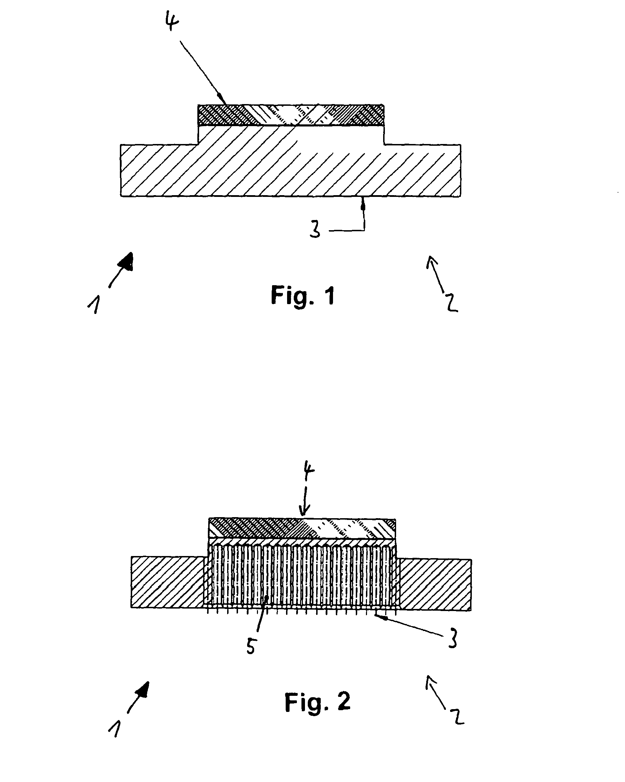

In Figur 1 ist ein Mundstück 2 mit einem Formkörper 1 zum Extrudieren einer keramischen Masse im Querschnitt dargestellt. Der Formkörper 1 wird von einem ersten Formkörperteil 3 und einem zweiten Formkörperteil 4 gebildet. Das erste und zweite Formkörperteil 3, 4 sind zwei getrennte, gesonderte Bauteile, die fest miteinander verbunden sind.

Der zweite Formkörperteil 4 besteht aus einem hochverschleißfesten Werkstoff mit einer geringen mechanischen Festigkeit, d. h. der Formkörperteil 4 ist nur mit einer geringen Spannung, insbesondere Biegespannung, beanspruchbar. Als hochverschleißfeste Werkstoffe für den zweiten Formkörperteil 4 kommen beispielsweise Hartmetalle, z. B. Wolframkarbid, verschiedene Sintermetalle sowie Keramiken wie Aluminiumoxyd oder Siliziumkarbid in Betracht.

In das erste Formkörperteil 3 werden Speisebohrungen 5 eingearbeitet. Außerdem hat das erste Formkörperteil 3 die Aufgabe, die im Formkörper 1 auftretenden Spannungen, insbesondere Biegespannungen aufgrund der an der Einlassseite 8 wirkenden Extrusionspressdrücke aufzunehmen. Der Werkstoff für das erste Formkörperteil 3 weist deshalb eine hohe mechanische Festigkeit auf, d. h. dieser ist mit einer hohen Spannung beanspruchbar. Der Werkstoff des ersten Formkörperteils 3 ist außerdem spanend bearbeitbar, um die Speisekanäle 5 kostengünstig herstellen zu können. Als Werkstoff für das erste Formkörperteil 3 kommt beispielsweise gehärteter Werkzeugstahl in Betracht. Andererseits weisen die Werkstoffe des ersten Formkörperteils 3 im Allgemeinen eine geringe Verschleißfestigkeit auf.

In den Figuren 1 bis 4 sind die einzelnen Ausgestaltungen des Formkörpers 1 bei der Herstellung dargestellt.

Es liegen zunächst zwei getrennte Formkörperteile 3, 4 aus unterschiedlichen Werkstoffen vor, die beispielsweise durch Kleben, Hartlöten, Sintern, Schweißen, z. B. Lichtbogen-, Laser-, Induktiv- oder Reibschweißen oder heißisostatisches Pressen miteinander fest verbunden werden. Der Vorteil des Klebens besteht darin, dass ohne Wärme bzw. Hitze gearbeitet werden kann, so dass keine Abweichungen von den Maßtoleranzen, z. B. wegen Schwinden, auftreten können. Beim Kleben können vorteilhafterweise elektrisch leitende Keramiken als Verschleißteil aufgeklebt werden. Ein Vorteil des Hartlötens ist, dass es bei relativ niedrigen Temperaturen, unter 700° C, ausgeführt werden kann und eine ausreichend hohe Verbindungsfestigkeit erreicht wird. Das Sintern und heißisostatische Pressen gestattet die Herstellung einer sehr festen Verbindung über die gesamte Verbindungsfläche zwischen dem ersten und zweiten Formkörperteil 3, 4. Schweißen ermöglicht die Herstellung ebenfalls einer sehr festen Verbindung. Die einzelnen Verbindungsverfahren sind auf die verwendeten Werkstoffe und/oder das Anwendungsgebiet für das erste und zweite Formkörperteil 3, 4 abzustimmen.

In Figur 1 sind das erste Formkörperteil 3 und das zweite Formkörperteil 4 des Formkörpers 1 nach dem Verbinden dargestellt.

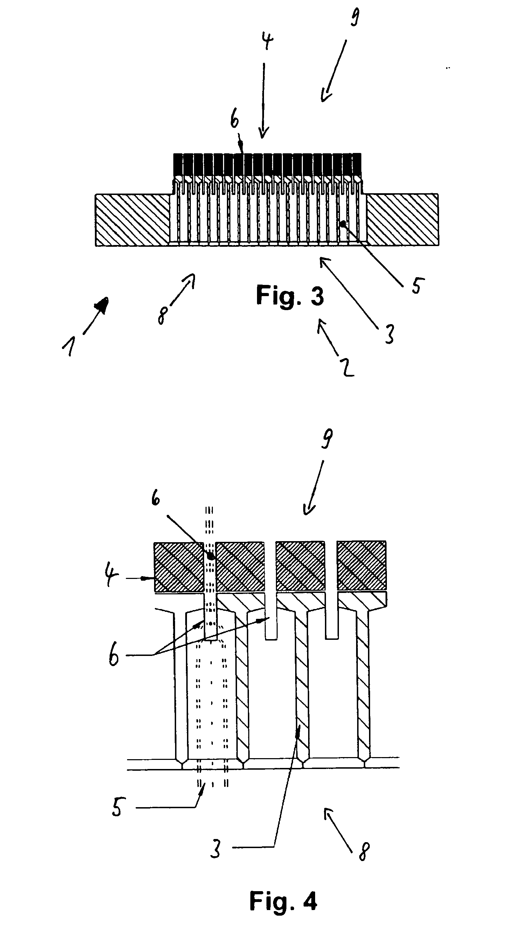

Nach dem Verbinden des ersten Formkörperteils 3 mit dem zweiten Formkörperteil 4 werden die Speisebohrungen 5 mittels Bohren in das erste Formkörperteil 3 eingebracht (Figur 2). Es ist jedoch auch möglich, dass die Speisebohrungen 5 in das erste Formkörperteil 3 vor dem Verbinden mit dem zweiten Formkörperteil 4 eingearbeitet werden. Aufgrund des verwendeten Werkstoffes für das erste Formkörperteil 3, nämlich Werkzeugstahl, kann dies wirtschaftlich durchgeführt werden. Werkzeugstahl ermöglicht das einfache und exakte Einbringen von Speisebohrungen gegenüber härteren und verschleißfesteren Werkstoffen, bei denen die Bohrgeschwindigkeit deutlich kleiner ist. Im Anschluss an das Verbinden der beiden Formkörperteile 3, 4 miteinander werden die Auslasskanäle 6 mittels Funkenerosion in das zweite Formkörperteil 4 eingearbeitet (Figur 3). Das Mundstück 2 mit dem Formkörper 1 weist damit eine Einlassseite 8 mit Speisebohrungen 5 und eine Auslassseite 9 mit Auslasskanälen 6 auf. Die lichte Weite der Speisebohrungen 5 ist größer als die lichte Weite der Auslasskanäle 6 (Figur 4).

Die keramische Masse als zu verarbeitender Werkstoff wird beim Strangpressen oder Extrudieren aus einer Druckkammer im plastifizierten Zustand durch das Mundstück 2 kontinuierlich ins Freie gepresst. Die keramische Masse strömt somit ausgehend von der Einlassseite 8 durch die Speisebohrungen 5, anschließend durch die Auslasskanäle 6 und gelangt an der Auslassseite 9 ins Freie. Auf diese Weise können beispielsweise Wabenkörper für Katalysatoren oder Russfilter von Kraftfahrzeuge mit Verbrennungsmotor hergestellt werden.

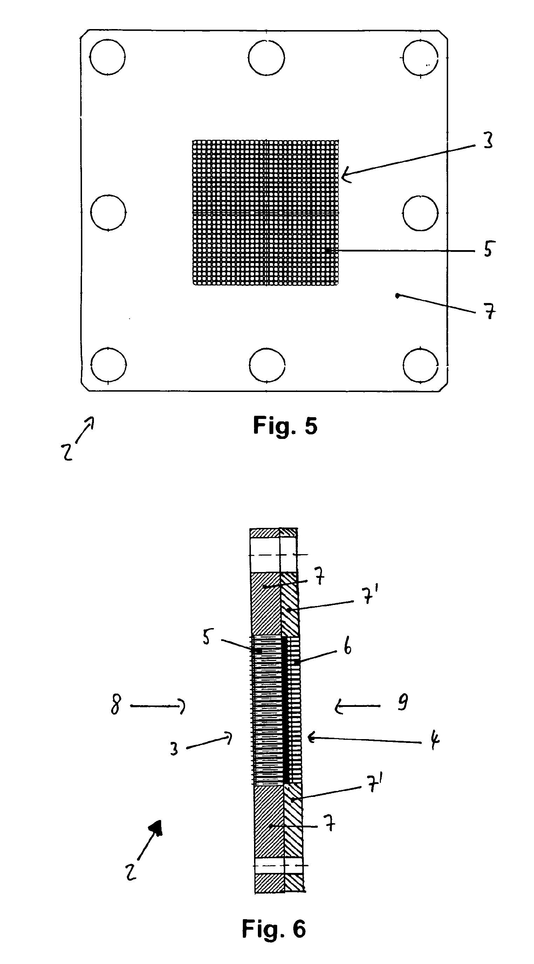

In den Figuren 5 und 6 ist das Mundstück 2 mit einem Rahmen 7 und einem Zweitrahmen 7' in Draufsicht und im Querschnitt dargestellt. Der Rahmen 7 dient zum Befestigen des ersten Formkörperteils 3 und der Zweitrahmen 7' fixiert das zweite Formkörperteil 4.

Die Kombination der beiden unterschiedlichen Werkstoffe für das erste und zweite Formkörperteil 3, 4 gestattet es, die positiven Eigenschaften der jeweiligen Werkstoffe für den Einsatzfall in einem Formkörper 1 zum Extrudieren optimal einzusetzen.

Keramische Massen haben hoch abrasive Eigenschaften. Die Auslasskanäle 6 unterliegen dadurch beim Extrudieren einem erheblichen Verschleiß. Außerdem wird für Katalysatoren und Russfilter eine hohe Maßgenauigkeit verlangt, so dass ein Verschleiß am Formkörper 1 die Toleranz für die Maßgenauigkeit schnell überschreiten lässt. Werkstoffe mit einer hohen Verschleißfestigkeit sind jedoch im Allgemeinen nur sehr aufwendig und teuer spanend zu bearbeiten, d. h. zum Einbringen der Speisebohrungen 5. Darüber hinaus ist normalerweise die mechanische Festigkeit aufgrund der großen Härte und Spröde gering, so dass Spannungen, insbesondere Biegespannungen, aufgrund der an der Einlassseite 8 einwirkenden Extrusionspressdrücke kaum aufgenommen werden können.

Die Verwendung eines Werkstoffes mit einer hohen mechanischen Festigkeit für das erste Formkörperteil 3 gestattet es, die Speisekanäle 5 wirtschaftlich, insbesondere spanend, herzustellen. Außerdem kann dieser Werkstoff des Formkörperteils 3 problemlos einen Großteil der auftretenden Spannungen aufgrund der an der Einlassseite 8 einwirkenden Extrusionspressdrücke aufnehmen. Der Werkstoff mit einer hohen Verschleißfestigkeit für das zweite Formkörperteil 4 ermöglicht ein exaktes und verschließarmes Extrudieren von Wabenkörpern, so dass ein Austausch des Formkörpers 1 nicht nach bereits kurzen Extrudierzeiten vorzunehmen ist.

## Patentansprüche

1. Mundstück (2) zum Extrudieren einer keramischen Masse zu einem Wabenkörper, das auf der Einlassseite (8) mit einer Vielzahl von Speisekanälen (5) und auf der Auslassseite (9) mit diesen korrespondierenden Auslasskanälen (9) versehen ist,
**dadurch gekennzeichnet,**
**dass** die Speisekanäle (5) in einem gesonderten ersten Formkörperteil (3) und die Auslasskanäle (9) in einem gesonderten zweiten Formkörperteil (4) eingearbeitet sind, dass die beiden Formkörperteile (3, 4) fest miteinander verbunden sind und dass das zweite Formkörperteil (4) eine höhere Verschleißfestigkeit aufweist als das erste Formkörperteil (3).

2. Mundstück nach Anspruch 1,
**dadurch gekennzeichnet,**
**dass** das erste Formkörperteil (3) mit einer höheren Spannung beanspruchbar ist als das zweite Formkörperteil (4) und dass das erste Formkörperteil (3) aus einem anderen Werkstoff besteht als das zweite Formkörperteil (4).

3. Mundstück nach Anspruch 1 oder 2,
**dadurch gekennzeichnet,**
**dass** die lichte Weite der Speisekanäle (5) größer bemessen ist als die lichte Weite der Auslasskanäle (6).

4. Mundstück nach einem oder mehreren der vorhergehenden Ansprüche,
**dadurch gekennzeichnet,**
**dass** der Werkstoff, aus dem das zweite Formkörperteil (4) besteht, ein Hartmetall, z. B. Wolframkarbid, ein Sintermetall oder eine Keramik, z. B. Aluminiumoxyd oder Siliziumkarbid, ist.

5. Mundstück nach einem oder mehreren der vorhergehenden Ansprüche,
**dadurch gekennzeichnet,**
**dass** der Werkstoff, aus dem das erste Formkörperteil (3) besteht, Stahl, z. B. vergüteter Werkzeugstahl, ist.

6. Mundstück nach einem oder mehreren der vorhergehenden Ansprüche,
**dadurch gekennzeichnet,**
**dass** die beiden Formkörperteile (3, 4) von einem Rahmen bzw. Zweirahmen (7, 7') eingefasst sind.

7. Verfahren zur Herstellung eines Mundstückes (2) zum Extrudieren einer keramischen Masse zu Wabenkörpern mit einem Formkörper (1), insbesondere nach einem oder mehreren der vorhergehenden Ansprüche, wobei der Formkörper (1) ein erstes Formkörperteil (3) mit Speisekanälen (5) auf der Einlassseite (8) und ein zweites Formkörperteil (4) mit Auslasskanälen (6) auf der Auslassseite (9) umfasst,
in folgenden Schritten:
- Erstellen eines ersten Formkörperteils (3),
- Erstellen eines zweiten Formkörperteils (4) mit einer höheren Verschleißfestigkeit als das erste Formkörperteil (3) oder umgekehrt,
- Verbinden des ersten und zweiten Formkörperteiles (3, 4) zum Formkörper (1),
- Einarbeiten von Speisekanälen (5) in das erste Formkörperteil (3) vor oder nach dem Verbinden und
- Einarbeiten von Auslasskanälen (6) in das zweite Formkörperteil (4) vor oder nach dem Verbinden.

8. Verfahren nach Anspruch 7,
**dadurch gekennzeichnet,**
**dass** das erste und zweite Formkörperteil (3, 4) mittels Kleben, Hartlöten, Sintern, Schweißen oder heißisostatischen Pressen miteinander verbunden werden.

9. Verfahren nach Anspruch 7 oder 8,
**dadurch gekennzeichnet,**
**dass** die Speisekanäle (5) des ersten Formkörperteils (3) mittels Spanen, insbesondere Bohren, und/oder die Auslasskanäle (6) des zweiten Formkörperteils (4) mittels Funkenerosion in diese eingearbeitet werden.
